# NEW EUROPEAN PATENT SPECIFICATION

(11) **EP 0 199 252 B2**
(45) Date of publication and mention of the opposition decision: **04.03.1998**
(45) Mention of the grant of the patent: 03.07.1991
(21) Application number: 86105135.7
(22) Date of filing: 14.04.1986
(51) Int. Cl.: G06K 1/12, B65C 11/02, G06K 15/00, G06K 17/00

(54) **A combination of a termal label printer and means for sorting parcels, and amethod for checking and sorting parcels.**
Kombination eines thermischen Etikettendruckers und von Mitteln zur Sortierung von Paketen, und ein Verfahren zur überwachung und Sortierung von Paketen.
Une combinaison d un imprimeur thermique d étiquettes et des moyens pour trier des paquets, et un procédé pour vérifier et trier des paquets.

(30) Priority: 19.04.1985 JP 82199/85; 26.04.1985 JP 89004/85
(43) Date of publication of application: 29.10.1986
(73) Proprietor: Kabushiki Kaisha Sato, Shibuya-ku Tokyo (JP)
(72) Inventor: Sato, Yo, Setagaya-ku Tokyo (JP); Ono, Tsutomu, Kitakimi-shi Iwate-ken (JP)
(74) Representative: Grünecker, Kinkeldey, Stockmair & Schwanhäusser Anwaltssozietät

(56) References cited:
- EP-A- 132 782
- EP-A- 0 126 898
- DE-A- 3 413 887
- US-A- 4 377 741

## Description

The present invention relates to a method for checking, with the aid of a thermal printer that parcels have correctly arrived at a stage prior to sorting the parcels, and subsequently sorting the parcels according to their destination. Moreover, the invention relates to a combination of a thermal label printer and means for sorting parcels based on a destination code to be printed by the printer on a confirmation label and attached to the parcel, for carrying out the above mentioned method.

Various types of portable data input and transmission devices referred to as data collectors data terminals and the like have been developed. These devices are provided with a pen scanner or other such data reading means which is used to scan bar codes or the like, with the device temporarily storing the data read by the data reader. The stored data is then supplied to a compact printer which prints it out on ordinary paper for confirmation or later reference or is input to a host computer or the like to undergo various types of data processing.

A thermal label printer comprising a printer unit with a thermal print medium passage, a thermal print medium position detecting means, a thermal print medium transport means, a thermal printing means for thermal printing on the thermal print medium, a data input means comprising at least a keyboard, a data memory means, a program memory means, an input/output means for data communication with at least one external device and a control means for controlling the afore-said means is known from DE-A-3 413 887. Said device is also adapted to be connected to an external computer (Figure 10). Said thermal label printer includes a printer of the conventional type wherein input data is only used as it is to print out labels but lacks any possibility to optionally perform a comparison check of the contents of the printing data.

EP-A-0 126 898 is classed as a hand held labelling machine which is characterized by providing an error checking means comparing predetermined format data with data entered by the data entry means to be printed out in order to assure a certain data format to be considered. Thus, only such input data can be printed on a new label which complys with a certain structure or format of data to be used.

Furthermore, an apparatus for updating price tags by means of a hand held printer is known from US-A-4,377,741. However, the updating method disclosed there cannot be used when it is desired to distribute parcels to various destinations.

Accordingly, the present invention intends to provide a method for checking with the aid of a thermal label printer that parcels have correctly arrived at a stage prior to the sorting of the parcels by destination and subsequently sorting the parcels, to assure that the correct parcel will be sent to the destination desired. Moreover, the present invention intends to provide a combination of a thermal label printer and means for sorting the parcels to carry out this method. This technical problem is solved by the teaching of claim 1 and the teaching of claim 3.

Advantageous embodiments of the present invention are laid down in the respective subclaims.

In the following the present invention is explained in greater detail by means of a preferred embodiment in conjunction with the accompanying drawings wherein:
Figure 1A is a perspective view of a first thermal printer,
Figure 1B is a perspective view of a second of the thermal lable printer,
Figure 2 is a sectional side view of the first and second printers showing its internal structure;
Figure 3A is a perspective view of a segment of a first label strip;
Figure 3B is a perspective view of a segment of a second label strip;
Figure 4A is a perspective view showing how the thermal center according to Fig. 1A is connected with a microcomputer;
Figure 4B is a perspective view showing how the thermal printer according to Fig. 1B is connected with a microcomputer;
Figure 5A is a perspective view showing how the thermal label printer according to Fig. 1A is connected with a host computer;
Figure 5B is a perspective view showing how the thermal printer according to Fig. 1B is connected with a host computer:
Figure 6 is a perspective view of a data memory 30; and
Figure 7 is a flowchart showing the process of the reading and determination of the data.

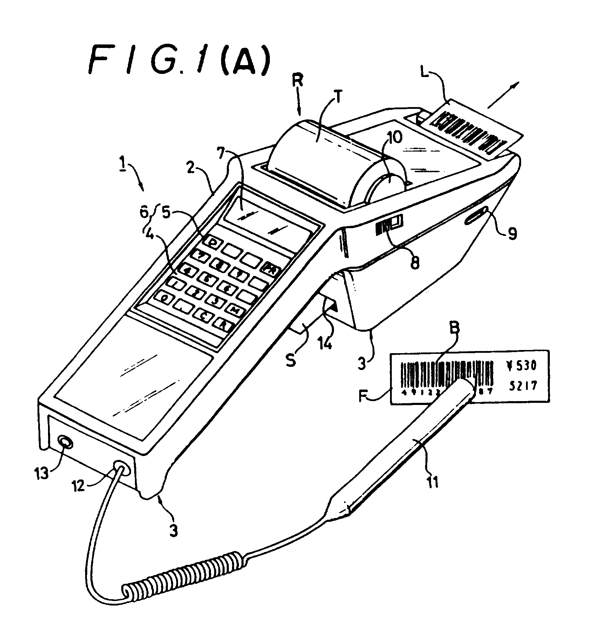

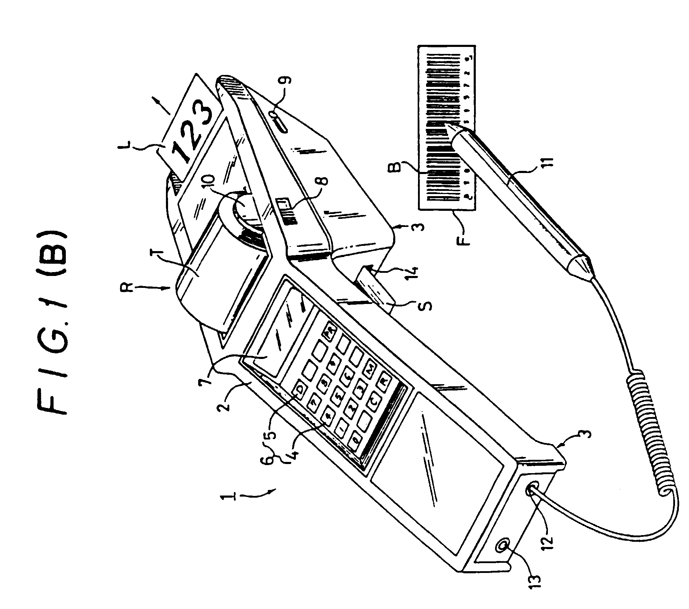

With reference to Figures 1A and 1B, the thermal printer shown is a desk-top type consisting of a main unit 2 having a flat bottom surface 3 which enables the printer to be placed on any desired supporting surface. The main unit 2 is provided on its top surface with data and command entry means consisting of a keyboard 6 compnsing a numeric pad 4 and various function keys 5, and at a position above the keyboard with a display 7 such as a liquid crystal display, for example. The main unit 2 is provided with a power switch 8 on one side and an open/close button 9 on each side. The main unit 2 is further provided at an upper portion with a support member 10 for holding a thermal lapel roll R which consists of a thermal label strip T wound into a roll, the arrangement being such that after labels L are printed and detached the labels L are discharged from a front portion of the unit.

At the rear end of the main unit 2 are provided a socket 12 for connecting a pen scanner 11 and a socket 13 for connecting a battery 27 to a battery charger which will be described later. The numeral 14 denotes the discharge outlet for the backing sheet S.

In the Figure 1A embodiment, the pen scanner 11 is used for reading a bar code B printed on a tag F and the data thus read is input to the thermal label printer 1.

In the Figure 1B embodiment, the pen scanner 11 can be used to read a despatch slip or the slip number bar code on a label F already affixed to a parcel.

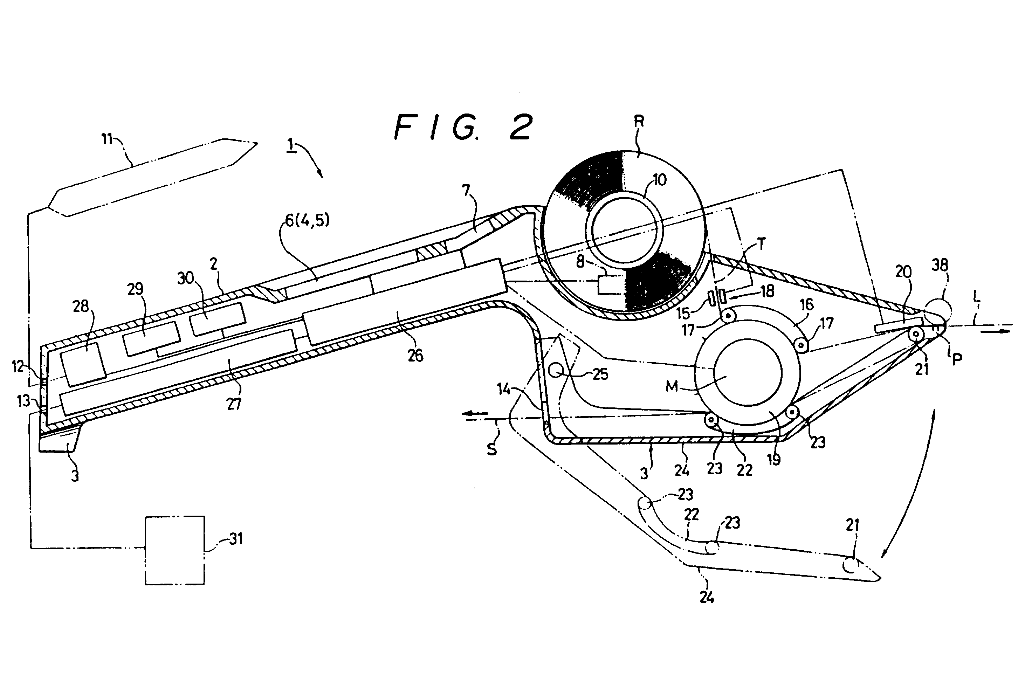

With reference to Figure 2, the thermal label strip T passes from the thermal lapel roll R on the support member 10 into a label strip passage 18 via a position sensor 15 and the guide rollers 17 of an upper press member 16.

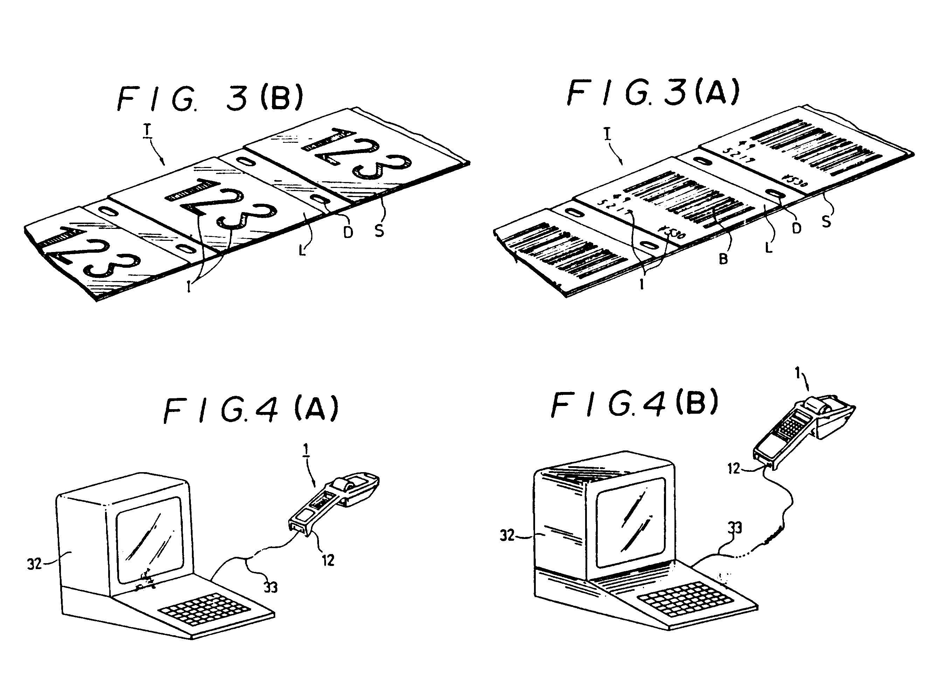

As shown in Figures 3A and 3B, the label strip T consists of a backing sheet S coated with a separating agent and having a plurality of labels L, each of which is coated with an adhesive, detachably adhered continuously along its length.

On the labels L of the thermal label strip T shown in Figure 3A is printed information I such as a bar code B. The backing sheet S is provided with holes D which are for position detection purposes.

On the labels L of the thermal label strip T shown in Figure 3B is printed a parcel destination code I which corresponds to the bar code B of the slip number, and the backing sheet S is provided with holes D which are for position detection purposes. The holes D can also be utilized for conveyance purposes by engagement with the conveyor roller 19 (Figure 2). The thermal print medium is not limited to the said labels; depending on how the medium is going to be used, tags or the like not coated with adhesive may also be used.

The holes D can also be utilized for conveyance purposes by engagement with the conveyor roller 19 (Figure 2).

Reverting to Figure 2, the thermal label strip T passes via the conveyor roller 19 to a thermal print head 20 and a platen 21, is redirected at the platen 21 portion, where the labels L are peeled off, so that just the backing strip is directed back to engagement with the conveyor roller 19, guided by the guide rollers 23 of the lower press member 22, and the backing sheet S then feeds out from the main unit 2 via the discharge outlet 14. A bending pin P (shown by a phantom line) may be provided in front of the platen 21 to form the label peeling means which peels the labels L from the backing sheet S as the backing sheet S is redirected.

The loading of the label strip T is accomplished by working the open/close buttons 9 to allow the bottom cover 24 section, which includes the platen 21 and the lower press member 22, to swing downwardly about pivots 25, thereby making it possible to insert the roll of thermal label strip T. Any conventional type of opening/closing mechanism may be used for this purpose, so details thereof are herein omitted. The conveyor roller 19 is driven by the stepped rotation action of a stepping motor M so as to move the thermal label strip T in the required direction for printing and conveyance.

The main unit 2 houses a control circuit 26. This control circuit 26 is connected to the battery 27, an interface 28 for data input from and output to external devices, a ROM program memory 29 for communication and control programs, a RAM data memory 30, and the keyboard 6. The display 7, sensor 15, thermal print head 20 and stepping motor M are also connected to the control circuit 26 and are thereby controlled by the control circuit 26. The battery 27 is a rechargeable type and can be connected via the socket 13 to an external battery charger 31.

Figure 4A shows the thermal label printer connected to a microcomputer 32 to allow data I/O operations therebetween. Data can be transferred to the microcomputer 32 via the socket 12 and a cable 33.

Figure 4B shows the thermal printer connected to a microcomputer 32 to allow data I/O operations therebetween.

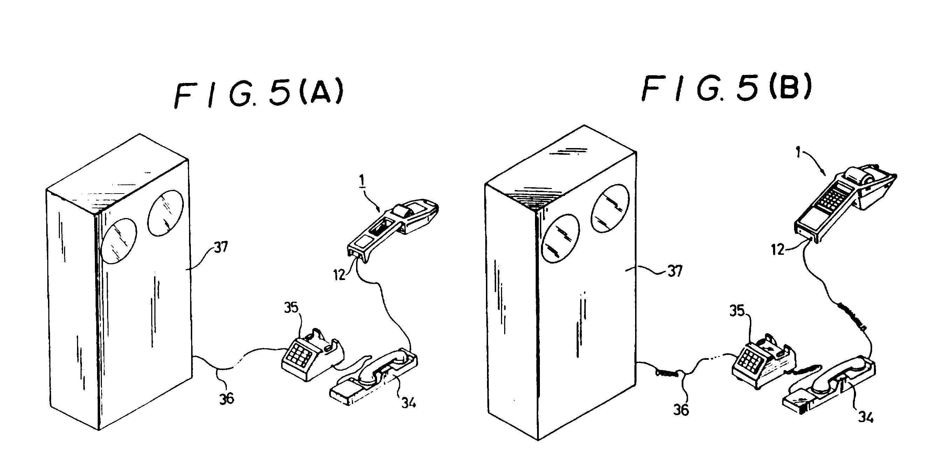

Figures 5A and 5B show an acoustic coupler 34 being used to link the respective printers 1 to a host computer 37 via a telephone 35, by means of a wired or wireless link 36.

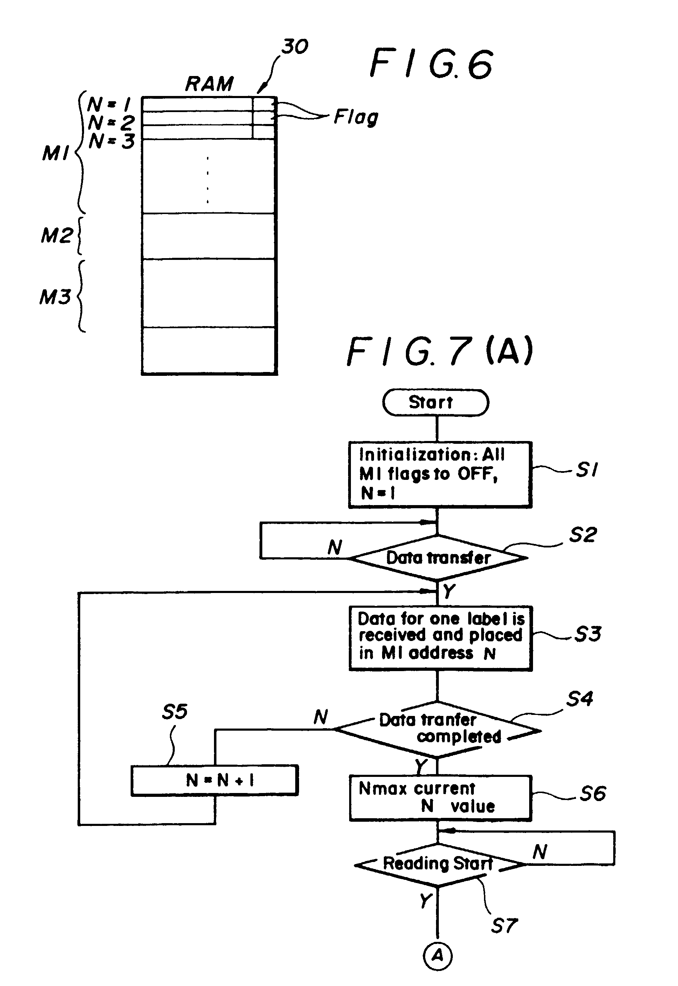

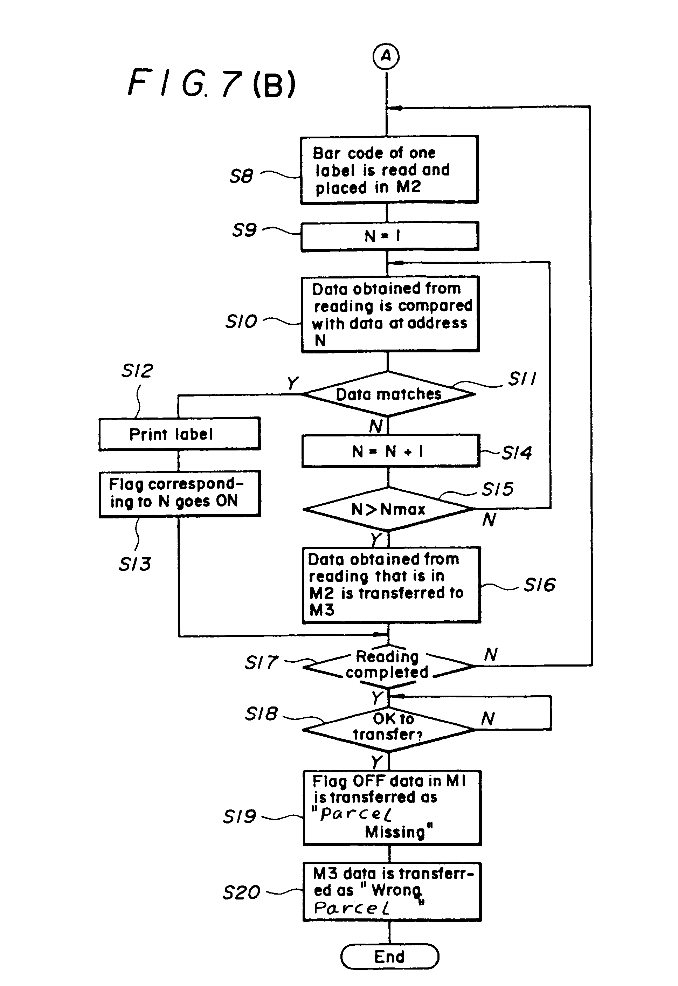

The operation will now be explained with reference to Figures 6 and 7.

Parcels coming from the despatcher are already printed with the slip number bar code B. The thermal printer is used at the stage prior to the sorting of the parcels by destination area to provide each parcel with a destination code I in a numeric form that can be understood by the sorter and which corresponds to the said bar code B.

Thus, slip number, destination and other necessary information is input into the microcomputer 32 or the host computer 37 at the parcel collection stage, and at the stage prior to the sorting the printer 1 receives from the microcomputer 32 or host computer 37 in the form of computer data the slip number I and the corresponding bar code B. Steps S1 to S6 show this process: N indicates the order in which the data is received. The data thus received is stored in a specific memory area M1 of the data memory 30.

The sorter scans the slip number bar code B with the pen scanner 11 to input the data into the printer 1. This input data is stored in a specific memory area M2 of the data memory 30 (steps S7 and S8). The input data can be displayed on the display 7 for confirmation purposes.

In steps S8 to S17 it is determined whether the data (slip numbers of parcels at the collection stage) received from the computer matches the data that has just been read (i.e. the slip number actually attached to a parcel). This matching is done in steps S10 and S11: if the data match, the control circuit 26 outputs a print command, the destination code I corresponding to the slip number is printed on a label L at the thermal print head 20 (step S12), and a label L is peeled from the backing sheet S by the bending of the backing sheet S at the platen 21 and fed out from the main unit 2 so it can be manually taken and stuck on the parcel, forming a destination code I indication so as to enable a sorter to see the code and sort the parcel accordingly.

Instead of such sorting by the human eye, a destination bar code may be printed on the label L and read by a different scanner and sorted automatically. (This is not illustrated.) An application roller 38 (shown by a phantom line in Figure 2) may be provided in front of the platen 21 if large numbers of labels are involved.

When, owing to confusion, a parcel has gone astray and the expected reading is not obtained, or when a parcel that has been misrouted is read, the data is stored as non-matching data. Specifically, when a match is made with the data of the printed label, a flag goes ON (step S13) and when no match is made the flag stays in the OFF state. In the case of a misrouted parcel being read, so that the data input is determined as differing from the received data in step S15, the read data that has been stored in the memory area M2 is transferred to the memory area M3 (step S16). On the basis of this read data it is determined whether a parcel is missing or the wrong parcel, and this information is stored in the memory and displayed on the display 7 or transferred to the microcomputer 32 or the host computer 37 for parcel-error processing (steps S19 and S20).

When on the basis of the comparison it is determined that the data do not match, the data is stored temporarily in the memory and can be communicated to a central computer, it becomes possible to accumulate data on parcels which have gone adrift or have been erroneously included. Where it is desired that the thermal printer be easily portable, a fixed or detachable type handle (not shown) may be provided on the bottom of the main unit 2.

## Claims

1. Method for checking, with the aid of a thermal label printer (1), that parcels have correctly arrived at a stage prior to sorting the parcels and subsequently sorting the parcels according to their destination,
said thermal label printer (1) comprising a printer unit (20) having a data input means (6,11), a data memory means (30), a program memory means (29), an input/output means (12,28) for data communication with at least one external computer (32,37), and a control means (26) for controlling the afore-said means,
said method comprising the following steps:
attaching a slip number bar code (B) to a parcel,
inputting data representing the slip number bar code (B) and destination code (I) of the parcel in said at least one external computer (32,37) at a parcel collecting stage, and temporarily storing (S3) the data in a first memory area (M1) of the data memory means (30) as first data from said at least one external computer,
at the stage prior to sorting , scanning (S8) the slip number bar code (B) on the parcel by means of said data input means (11), thereby inputting the data of said slip number bar code (B) into the thermal label printer (1), and temporarily storing the data of said slip number bar code (B) at a second memory area (M2) of the data memory means (30) as second data,
comparing (S11) said first and second data temporarily stored in the data memory means (30) and only when the first data from the external computer and the second data from the data input means match, providing (S12) a print command signal through said control means (26) for printing the destination code (I) on a confirmation label (L), the destination code (I) corresponding to the slip number bar code (B) and attaching the confirmation label (L) to the parcel and subsequently sorting the parcel according to the destination code (I).

2. Method as claimed in claim 1, **characterised in that** when the first data and the second data do not match with each other, the second data are transferred to a third memory area (M3) of the data memory means (30) for display and/or transmission to the external computer (32,37) for further data processing.

3. A combination of a thermal label printer (1) and means for sorting parcels based on a destination code (I) to be printed by said printer (1) on a confirmation label (L) and attached to the parcel for carrying out the method of claim 1,
said thermal label printer (1) comprising a printer unit having a thermal print medium passage, a thermal print medium position detecting means (15), a thermal print medium transport means (19), a thermal printing means (20) for thermal printing on the thermal print medium, a data input means (6,11) comprising at least a keyboard (6), a data memory means (30), a program memory means (29), an input/output means (12,28) for data communication with at least one external computer (32,27) and a control means (26) for controlling the afore-said means comprising a comparator means which is adapted to temporarily store in the data memory means (30) both
(a) data read from a slip number bar code (B) attached to a parcel through the data input means (11) as second data at a stage prior to the sorting of the parcel by its destination code (I) and after a collection stage,
(b) data representing the slip number bar code (B) and destination code (I) of the parcel and received through the external computer (32,37) as first data, said data having been input to the external computer (32,37) at the parcel collection stage,
said control means (26) being adapted to output a print command signal for printing the destination code (I) on the confirmation label (L) when the second data input from the data input means (11) match with the first data input from the external computer (32,37), and that when the first data and the second data do not match with each other, said second data are stored in said data memory means (30) for display and/or transmission to the external computer (32,37) for further data processing.

4. The combination as claimed in claim 3, **characterised in that** said data input means (6,11) additionally comprises a pen scanner (11) for inputting the second data by scanning a bar code.

5. The combination as claimed in claim 3, **characterised in that** the thermal printer (1) comprises a main unit (2) providing a socket (12) for selectively connecting the pen scanner (11) or a wire link of the external computer (32,37).

6. The combination as claimed in claim 3, **characterised in that** a wireless connection is provided between the external computer (32,37) preferably a host or microcomputer, and the thermal label printer.

7. The combination as claimed in claim 3, **characterised in that** the thermal label printer (1) comprises a main unit (2) housing at least the control means (26), a battery (27), an interface (28) for data input from and data output to the external computer (32,37), the program memory means (29) and the data memory means (30) in a flat housing with a keyboard (6) and a display (7) at a position above the keyboard (6) on its top surface and supporting a thermal label roll (R) at an upper portion of the main unit (2), with the thermal label strip (T) passing from the thermal label roll (R) through a label strip passage (18) comprising a position sensor (15) and guide rollers (17) of an upper press member (16), associated with a conveyor roller (19), to a thermal head (20) and a platen (21) where the labels (L) are peeled off a backing sheet (S) which is redirected rearwardly to engage the conveyor roll (19) at the lower side thereof, guided by guide rollers (23) of a lower press member (22) to be discharged backwards out of the main unit (2) via a discharge outlet (14).

8. The combination as claimed in claim 5, **characterised in that** the thermal label printer (1) is of a desk-type comprising said main unit (2) enabling the thermal label printer to be placed on a supporting surface.

9. The combination as claimed in claim 3, **characterised in that** the thermal label printer (1) comprises a handle provided on the bottom of the main unit (2).

## Patentansprüche

1. Verfahren zur Überprüfung, mit Hilfe eines thermischen Etikettendruckers (1), daß Pakete richtig in einer Stufe vor der Sortierung angekommen sind und zum anschließenden Sortieren der Pakete nach ihrer Zielbestimmung,
wobei der thermische Etikettendrucker (1) eine Druckeinheit (20) mit einer Dateneingabevorrichtung (6,11) aufweist, eine Datenspeichervorrichtung (30), eine Programmspeichervorrichtung (29), eine Ein/Ausgabevorrichtung (12, 28) zur Kommunikation mit zumindest einem externen Compter (32, 37), und eine Steuervorrichtung (26) zur Steuerung der zuvor genannten Vorrichtungen,
wobei das Verfahren folgende Schritte aufweist:
Anbringen eines Zettelnummer-Strichcodes (B) an einem Paket,
Eingeben von Daten, die den Zettelnummer-Strichcode (B) und einen Zielbestimmungscode (I) des Paketes darstellen, in den zumindest einen extemen Computer (32, 37) in einer Paketsammelstufe, und zeitweiliges Speichern (S3) der Daten in einem ersten Speicherbereich (M1) der Datenspeichervorrichtung (30) als erste Daten von dem zumindest einen externen Computer,
Einscannen (S8) des Zettelnummer-Strichcodes (B) auf dem Paket mit der Dateneingabevorrichtung (11) in der Stufe vor dem Sortieren, wodurch die Daten des Zettelnummer-Strichcodes (B) in den thermischen Etikettendrucker (1) eingegeben werden, und zeitweiliges Speichern der Daten des Zettelnummer-Strichcodes (B) in einem zweiten Speicherbereich (M2) der Datenspeichervorrichtung (30) als zweite Daten, Vergleichen (S11) der ersten und zweiten Daten, die zeitweilig in der Datenspeichervorrichtung (30) gespeichert sind, und nur dann, wenn die ersten Daten aus dem externen Computer und die zweiten Daten aus der Dateneingabevorrichtung zusammenpassen, Erzeugen (S12) eines Drucksteuersignals durch die Steuervorrichtung (26) zum Drucken des Zielbestimmungscodes (I) auf ein Bestätigungsetikett (L), wobei der Zielbestimmungscode (I) zu dem Zettelnummer-Strichcode (B) korrespondiert und Anbringung des Bestätigungsetiketts (L) an dem Paket und anschließend Sortieren des Paketes entsprechend des Zielbestimmungscodes (I).

2. Verfahren nach Patentanspruch 1, **dadurch gekennzeichnet,** daß dann, wenn die ersten Daten und die zweiten Daten nicht zusammenpassen, die zweiten Daten in einen dritten Speicherbereich (M3) der Datenspeichervorrichtung (30) überführt werden, zur Anzeige und/oder Übertragung zu dem externen Computer (32, 37) zur weiteren Datenverarbeitung.

3. Eine Kombination aus einem thermischen Etikettendrucker (1) und Vorrichtungen zur Sortierung von Paketen auf der Grundlage eines Zielbestimmungscodes (I), der durch den Drucker (1) auf ein Bestätigungsetikett (L) gedruckt und an dem Paket angebracht wird, zur Durchführung des Verfahrens nach Anspruch 1,
wobei der thermische Etikettendrucker (1) eine Druckeinheit mit einem einen Durchgang für ein thermisches Druckmedium aufweist, sowie eine Lageerfassungsvorrichtung (15) für das thermische Druckmedium, eine Transportvorrichtung (19) für das thermische Druckmedium, eine thermische Druckvorrichtung (20) zum thermischen Drucken auf das thermische Druckmedium, eine Dateneingabevorrichtung (6,11), die zumindest eine Tastatur (6) aufweist, eine Datenspeichervorrichtung (30), eine Programmspeichervorrichtung (29), eine Ein/Ausgabevorrichtung (12, 28) zur Datenkommunikation mit zumindest einem extemen Computer (32, 27) und einer Steuervorrichtung (26) zur Steuerung der zuvor genannten Vorrichtungen, die eine Vergleichervorrichtung aufweist, die zur zeitweiligen Speicherung in der Datenspeichervorrichtung (30) folgender Daten ausgebildet ist:
a) Daten, die gelesen werden von einem Zettelnummer-Strichcode (B), der an dem Paket angebracht ist, durch die Dateneingabevorrichtung (11) als zweite Daten auf einer Stufe vor dem Sortieren des Paketes nach einem Zielbestimmungscode (I) und nach einer Einsammelstufe,
b) Daten, die den Zettelnummer-Strichcode (B) und einen Zielbestimmungscode (I) des Paketes darstellen und die von dem externen Computer (32, 37) als erste Daten empfangen werden, wobei die Daten in den extemen Computer (32, 37) während der Paketeinsammelstufe eingegeben worden sind,
wobei die Steuervorrichtung (26) ausgebildet ist, um ein Drucksteuersignal auszugeben zum Drucken des Zielbestimmungs-Codes (I) auf ein Bestätigungsetikett (L), wenn die von der Dateneingabevorrichtung (11) eingegebenen zweiten Daten mit den von dem externen Computer (32, 37) eingegebenen Daten zusammenpassen, und daß dann, wenn die ersten und zweiten Daten nicht miteinander zusammenpassen, die zweiten Daten in der Datenspeichervorrichtung (30) zur Anzeige und/oder Übertragung zu dem externen Computer (32, 37) zur weiteren Datenverarbeitung gespeichert werden.

4. Kombination nach Anspruch 3, **dadurch gekennzeichnet,** daß die Dateneingabevorrichtung (6,11) zusätzlich einen Stift-Scanner (11) zur Eingabe der zweiten Daten durch Scannen des Strich-Codes aufweist.

5. Kombination nach Anspruch 3, **dadurch gekennzeichnet,** daß der thermische Drucker (1) eine Haupteinheit (2) aufweist, die einen Anschluß (12) bereitstellt zum ausgewählten Anschließen des Stift-Scanners (11) oder einer Kabelverbindung des externen Computers (32, 37).

6. Kombination nach Anspruch 3, **dadurch gekennzeichnet,** daß eine kabellose Verbindung zwischen dem externen Computer (32, 37), der vorzugsweise ein Hostrechner oder ein Mikrocomputer ist, und dem thermischen Etikettendrucker vorgesehen ist.

7. Kombination nach Anspruch 3, **dadurch gekennzeichnet,** daß der thermische Etikettendrucker (1) eine Haupteinheit (2) aufweist, die zumindest die Steuervorrichtung (26) aufnimmt, eine Batterie (27), ein Interface (28) zur Dateneingabe von und Datenausgabe zu dem externen Computer (32, 37), die Programmspeichervorrichtung (29) und die Datenspeichervorrichtung (30) in einem flachen Gehäuse mit einer Tastatur (6) und ein Display (7) an einer Position oberhalb der Tastatur (6) an seiner obersten Fläche, und eine Thermostreifenrolle (R) an einem oberen Abschnitt der Haupteinheit (2) lagert, wobei der thermische Etikettenstreifen (T) von der thermischen Etikettenrolle (R) durch eine Etikettenabstreifpassage (18), verläuft, die einen Lagersensor (15) und Führungsrollen (17) eines oberen Andruck-Teils (16) aufweist, verbunden mit einer Förderrolle (19), zu einem Thermokopf (20) und einer Walze (21), wo die Etikettten (L) von einer Rückfolie (S) abgezogen werden, die nach hinten umgelenkt wird, um mit der Förderrolle (19) an deren unterer Seite in Eingriff zu kommen, geführt durch Führungsrollen (23) eines Druckteiles (22), um nach hinten aus der Haupteinheit (2) über einen Ausgabeauslaß (14) abgeführt zu werden.

8. Kombination nach Anspruch 5, **dadurch gekennzeichnet,** daß der thermische Etikettendrucker (1) vom Scheibentyp ist, der eine Haupteinheit (2) aufweist, die ein Plazieren des thermischen Etikettendruckers auf eine Ablagefläche ermöglicht.

9. Kombination nach Anspruch 3, **dadurch gekennzeichnet,** daß der thermische Etikettendrucker (1) einen Handgriff aufweist, der am Boden der Haupteinheit (2) vorgesehen ist.

## Revendications

1. Procédé pour vérifier, à l'aide d'un imprimeur thermique d'étiquettes (1), que des paquets sont correctement arrivés à une étape précédant le tri des paquets, puis pour trier les paquets selon leur destination,
l'imprimeur thermique d'étiquettes (1) comprenant une unité d'impression (20) ayant des moyens d'entrée de données (6, 11), des moyens de mémoire de données (30), des moyens de mémoire de programme (29), des moyens d'entrée-sortie (12, 28) pour faire communiquer des données avec au moins un ordinateur extérieur (32, 37), et un moyen de commande (26) pour commander lesdits moyens,
le procédé comprenant les étapes suivantes :
- attacher un code à barre numérique temporaire (B) à un paquet,
- fournir des données représentant le code à barre numérique temporaire (B) et un code de destination (I) du paquet à l'ordinateur extérieur (32, 37) à une étape de collecte des paquets, et à stocker temporairement (S3) les données dans une première zone de mémoire (M1) des moyens de mémoire de données (30) comme premières données de l'ordinateur extérieur,
- à l'étape précédant le tri, examiner (S8) le code à barre numérique temporaire (B) du paquet par le moyen d'entrée de données (11), forunissant ainsi les données du code à barre numérique temporaire (B) à une seconde zone de mémoire (M2) des moyens de mémoire de données (30) comme secondes données,
- comparer (S 11) les premières et secondes données temporairement stockées dans le moyen de mémoire de données (30) et, seulement lorsque les premières données de l'ordinateur extérieur et les secondes données du moyen d'entrée de données correspondent, délivrer (S 12) un signal de commande d'impression par le moyen de commande (26) pour imprimer le code de destination (I) sur une étiquette de confirmation (L), le code de destination (I) correspondant au code à barre numérique temporaire (B), et attacher l'étiquette de confirmation (L) au paquet, puis trier le paquet selon le code de destination (I).

2. Procédé selon la revendication 1, caractérisé en ce que, lorsque les premières données et les secondes données ne coïncident pas, les seconds données sont transférées dans une troisième zone de mémoire (M3) des moyens de mémoire de données (30) pour affichage et/ou transmission à l'ordinateur externe (32, 37) pour un traitement de données supplémentaire.

3. Combinaison d'un imprimeur thermique d'étiquettes (1) et de moyens de tri de paquets selon un code de destination (I) à imprimer par ledit imprimeur (1) sur une étiquette de confirmation (L) attachée au paquet pour accomplir le procédé de la revendication 1, l'imprimeur thermique d'étiquettes (1) comprenant une unité d'impression ayant un passage de support d'impression thermique, un moyen de détection (15) de la position du support d'impression thermique, un moyen de transport (19) du support d'impression thermique, un moyen d'impression thermique (20) pour une impression thermique sur le support d'impression thermique, un moyen d'entrée de données (6, 11) comprenant au moins un clavier (6), une mémoire de données (30), une mémoire de programme (29), un moyen d'entrée/sortie (12, 28) pour échanger ces données avec au moins un dispositif externe (32, 37) et un moyen de commande (26) pour commander les moyens susmentionnés comprenant un moyen comparateur qui est adapté pour stocker temporairement dans la mémoire de données (30) à la fois
a) des données lues sur un code à barre numérique temporaire (B) attaché à un paquet par les moyens d'entrée de données (11) comme secondes données à une étape précédant le tri du paquet selon son code de destination (I) et après une étape de collecte,
b) des données représentant le code à barre numérique temporaire (B) et le code de destination du paquet et reçues par l'ordinateur externe (32, 37) comme premières données, lesdites données ayant été fournies à l'ordinateur externe (32, 37) à l'étape de collecte des paquets,
les moyens de commande (26) étant adaptés pour délivrer un signal de commande d'impression pour imprimer le code de destination (I) sur l'étiquette de confirmation (L) lorsque les secondes données provenant des moyens d'entrée de données (11) coïncident avec les premières données provenant de l'ordinateur externe (32, 37), et pour que, lorsque les premières données et les secondes données ne coïncident pas, les secondes données sont stockées dans les moyens de mémoire de données (30) pour affichage et/ou transmission à l'ordinateur externe (32, 37) pour un traitement de données supplémentaire.

4. Combinaison selon la revendication 3, caractérisée en ce que lesdits moyens d'entrée de données (6, 11) comprennent de plus un crayon-lecteur (11) pour entrer les secondes données par la lecture d'un code à barres.

5. Combinaison selon la revendication 3, caractérisée par une unité principale (23) comprenant une prise (12) pour connecter sélectivement le crayon-lecteur (11) ou un câble électrique de l'ordinateur externe (32, 37).

6. Combinaison selon la revendication 3, caractérisée en ce qu'une connexion sans fil est prévue entre l'ordinateur externe (32, 37), de préférence un ordinateur-serveur ou un micro-ordinateur (37, 32) et l'imprimeur thermique d'étiquettes.

7. Combinaison selon la revendication 3, caractérisée en ce que l'imprimeur thermique d'étiquettes (1) comprend une unité principale (2) logeant au moins l'organe de commande (26), une batterie (27), une interface (28) pour l'entrée de données et la sortie de données de l'ordinateur externe (32, 37) et vers lui, le moyen mémoire de programme (29) et le moyen de mémoire de données (30) dans un boîtier plat avec un clavier (6) et une unité d'affichage (7) à une position au-dessus du clavier (6) sur sa surface supérieure et supportant un rouleau (R) d'étiquettes thermiques au niveau d'une portion supérieure de l'unité principale (2), la bande (T) d'étiquettes thermiques passant depuis le rouleau (R) d'étiquettes thermiques à travers un passage (18) de bande d'étiquettes comprenant un détecteur de position (15) et des rouleaux de guidage (17) d'un élément presseur supérieur (16), associés à un galet de roulement (19), jusqu'à une tête thermique (20) et un cylindre (21) où les étiquettes (L) sont détachées d'une feuille de support (S) qui est ramenée vers l'arrière pour venir en contact avec le galet de roulement (19) du côté inférieur de celui-ci, guidée par des rouleaux de guidage (23) d'un élément presseur inférieur (22) pour être déchargée vers l'arrière hors de l'unité principale (2) par une sortie de dégagement (14).

8. Combinaison selon la revendication 5, caractérisée en ce que l'imprimeur d'étiquettes est d'un modèle de table comprenant une unité principale (2) qui permet à l'imprimeur thermique d'étiquettes d'être placé sur une surface de support.

9. Combinaison selon la revendication 3, caractérisée en ce que l'imprimeur thermique d'étiquettes comprend une poignée placée sur le dessous de l'unité principale (22).
